# EUROPÄISCHE PATENTANMELDUNG

(11) **EP 1 988 613 A2**
(43) Veröffentlichungstag der Anmeldung: **05.11.2008**
(21) Anmeldenummer: 08003857.3
(22) Anmeldetag: 01.03.2008
(51) Int. Cl.: H02G 3/04, H02G 3/12

(54) **Vorrichtung zur Installation von Energie- und Datenkabeln sowie von Systemkomponenten**

(30) Priorität: 03.05.2007 DE 102007020958
(71) Anmelder: In-akustik GmbH & Co. KG, 79282 Ballrechten-Dottingen (DE)
(72) Erfinder: Kauf, Peter, 66482 Zweibrücken (DE)
(74) Vertreter: Stippl, Hubert

(57) **Zusammenfassung**

Die vorliegende Erfindung betrifft eine Vorrichtung zur Installation von Energie- und Datenkabeln sowie von Systemkomponenten. Sie umfasst vertikal montierte Säulenelemente (10, 20, 30) sowie horizontal montierte Verbindungsleisten (40), die die Säulenelemente (10, 20, 30) miteinander verbinden. Die Säulenelemente (10, 20, 30) sind mit mindestens einer abnehmbaren Abdeckung (12) versehen, welche die Vorderseite des jeweiligen Säulenelementes (10, 20, 30) inklusive der Abkantungen abdeckt und mit Öffnungen (50) ausgestattet ist. In das Säulenelement ist mindestens eine elektrisch isolierende Funktionsbox (51, 52) einbaubar, in die wiederum elektrische oder elektronische Systemkomponenten einbaubar sind. Die elektrische Funktionsbox (51, 52) weist mindestens eine Abdeckung (56) auf, die Öffnungen für Funktionsbereiche (83) der elektrischen oder elektronischen Systemkomponenten hat, so dass die Funktionsbereiche (83) soweit durch die Öffnung durchtauchen, dass sie auch noch durch die direkt darüber verlaufenden Säulenabdeckungen (12) durchtauchen können und alle metallischen Teile der Steckdosen (80), Schalter und Leuchten elektrisch isolierend abgedeckt sind.

## Beschreibung

Die Erfindung betrifft eine Vorrichtung zur Installation von Energie- und Daten-Kabeln sowie der Installation von Systemkomponenten und des Systembedingten Installationsverfahrens. Die erfindungsgemäße/n Vorrichtung/en ist/sind für die flexible Elektroinstallation in Wohn- und Geschäftsgebäuden bestimmt.

Dem Stand der Technik gemäss, werden zur Versorgung von Büro- und Wohnräumen mit elektrischer Energie, sowie mit Kommunikationsleitungen unterschiedliche Installations-Verfahren und Vorrichtungen zur Installation von Strom, Licht, Daten- und Computeranschlüssen eingesetzt. Die Versorgungs-Anschlüsse wie 230V Steckdosen, Schalter oder Datenanschlussdosen werden schon seit langem mittels dafür geeigneter Unterputz-Einbaudosen direkt in die Wände eingebaut, bzw. eingeputzt. Dieses Verfahren wird hauptsächlich in Wohngebäuden angewandt. Zur Verbindung der Dosen zu dem Strom- oder Netzwerkverteiler mittels Installationskabel werden die Wände aufgeschlitzt oder gestemmt oder Hohlräume in der Wand genutzt. In diese Schlitze/Hohlräume werden die Leitungen verlegt und die Wände anschließend wieder verputzt. Meist werden in den Räumen Abzweigdose/n für die Verteilung der Installationsleitungen gesetzt, zu der die Leitungen vom Haupt-Verteiler und von den Steckdosen, Schaltern oder Leuchtenanschlüssen geführt werden. In komfortableren Anlagen werden Leerrohre zur Leitungsführung in den Wänden, im Boden oder in der Decke verlegt, so dass die Einzeldrähte und/oder Kabel in diese Rohre eingezogen werden können und nicht direkt in das Mauerwerk eingeputzt werden. Diese Art der Installation nennt man Unterputzinstallation und ist schon seit vielen Jahren die gängigste Art der Elektroinstallation.

Zu einzelnen Produkten der Unterputzinstallation oder der Leerrohinstallation existieren umfangreiche Patent- oder Gebrauchsmusterschriften, so z.B. DE20200501U1, DE10249289A1, CH695972A5, DE202005004028U1, DE20120003U1, DE202005000545U1.

Aufgrund der Tatsache, dass bei fest in den Wände eingebrachten Installationen später notwendige Veränderungen meist nur mit großem Aufwand möglich sind, hat sich in Büro- und Zweckgebäuden die Installationsweise mit Kabelkanälen entwickelt. Bei dieser Installationsart werden horizontal verlaufende Kabelkanäle direkt oder mit Abstand auf die Wände montiert. Meist werden die Kanäle dabei in Brüstungshöhe befestigt, daher auch der Name Brüstungskanäle. Ein besonderes Merkmal der Brüstungskanäle ist, dass alle Steckdosen und Schalter direkt in diese Kanäle eingebaut werden können und durch Öffnen der Deckel und/oder Abdeckungen die Installation relativ einfach erweitert, sowie die Position der Steckdosen und Schalter verändert werden kann. (DE 3708357A1, DE 29915094U1, DE 20204547U1, DE 29911657U1 oder DE 29909946U1). Der Einbau der Unterputz-Geräte wie Steckdosen und Schalter erfolgt über speziell auf den Kanal zugeschnittene Geräteeinbaudosen in vielfältigen Ausführungsformen z.B. DE 20000777U1, in denen die Geräte mit ihren üblichen Tragstegen oder Tragringen befestigt werden. Weiterhin werden spezielle Kanalsteckdosen (z.B. DE 20006029U1, DE20019290U1 oder EP 1120875A1) eingesetzt, die als komplette Einheiten eingebaut werden.

Bei der Installationsweise mit Brüstungskanälen werden die Installationsleitungen direkt und ununterbrochen von den Gebäude- oder Etagenverteilern über Decke oder Boden und dann in den Kanälen bis zu den Steckdosen geführt und von Fachkräften angeschlossen. Deshalb dürfen beispielsweise die Deckel der Kanäle aus Sicherheitsgründen nur mit Werkzeugen und nur von Fachkräften geöffnet werden können. Aufgrund des durch den Einbau der Anschlussdosen versperrten Kanalquerschnitts, besitzen die Brüstungskanäle eine Mindestgröße um noch genügend Installationsleitungen führen zu können. Die Art der Installation mit Brüstungskanälen wird ebenfalls schon sehr lange ausgeführt.

Soll die Kanalinstallation auf Höhe des Fußbodens erfolgen, gibt es alternativ zu den Brüstungskanälen so genannte Sockelleistenkanäle. Diese Kanaltypen sind nur zur Führung der Installationsleitungen vorgesehen und haben deshalb kleinere Querschnitte. Die zugehörigen Geräteboxen sind zur Aufnahme der handelsüblichen UP-Steckdosen oder Schalter konzipiert oder als spezielle Einheiten ausgeführt und werden bei dieser Installationsart auf die Sockelleistenkanäle aufgesetzt und/oder an den Wänden montiert (z.B. DE 20120026U1, DE 20008823U1). Die Steckdosenboxen sind hier ebenfalls direkt mit den Installationsleitungen verbunden und nur von Fachkräften anzuschließen.

Zur Steigerung der Flexibilität der Sockelleisten-Installationen hat sich eine alternative Verkabelung entwickelt. Dieses Konzept geht von einer festen Verkabelung bis zu so genannten RIS Punkten (DE 20210774U1, EP 1383216A1) aus, die auf den Rohboden montiert werden. Bei dem RIS Punkt handelt es sich um eine Box, die mit einer Kombination von Steckbuchsen für Energie (230V), Telekommunikation, Daten und/oder anderen Diensten verkabelt ist. Der angeschlossene Kabelstrang wird dann komplett und ununterbrochen über den Rohboden zum Verteiler geführt. Die RIS Punkte werden in jedem Raum platziert. Von diesen Punkten wird die Installation im Raum mit weiteren Installationsleitungen über die Sockelleiste zu den Steckdosenboxen fortgesetzt. Der RIS Punkt übernimmt die Aufgabe einer Abzweigdose bei Unterputzinstallationen. Diese Installationsweise mit der Unterbrechung der Installationsleitungen an dem RIS Punkt hat den Vorteil, dass bei nachträglichen Änderungen nur der Bereich zwischen RIS Punkt und Steckdosenbox betroffen ist und damit der Änderungsaufwand wesentlich reduziert wird.

Diese schon seit Jahren üblichen Installationsverfahren weisen unterschiedliche Mängel auf, welche eine optimierte Installation nicht zulassen. In Wohngebäuden wird meist die Unterputz-Installation angewandt.. Bei dieser Installationsart werden Unterputz Schalter und Steckdosen, sowie Leuchten an Decken und Wänden montiert. Anschlüsse für elektrische Geräte und Motoren werden mit in der Wand verlegten Leitungen versorgt.

Diese Installationsweise erfordert naturgemäß eine sehr exakte und aufwändige Planung der Positionen der Steckdosen, Leuchten und weiteren Anschlüssen. Nachträgliche Änderungen oder Erweiterungen der Installation sind selbst bei Verwendung von Leerohren sehr schwierig oder auch unmöglich. Da sich die Nutzung der Gebäude oder einzelner Räume jedoch immer häufiger ändert, oder durch eine neue Möblierung und technische Ausstattung auch neue Positionen für Steckdosen und Schalter notwendig werden, ist die Unterputz-Installation nicht mehr geeignet, den heutigen Anforderungen einer flexiblen, veränderbaren Installation gerecht zu werden. Durch neue Bauweisen, bei denen beispielsweise Fertigbetonelemente oder Holz und Glas verwendet wird, ist es zudem oft unmöglich, die für die Unterputzinstallation erforderlichen Schlitzungen der Wände vorzunehmen. Für die technische Aufrüstung von Altbauten bedeutet eine Unterputz-Installation eine sehr große bauliche Maßnahme, die mit erheblichen Kosten verbunden ist. Bei bestimmten energetischen Anforderungen an die Bauweisen wie z.B. beim Passivhaus sind alle Eingriffe in den Gebäudekörper, wie es eine Schlitzung der Wände bedeutet, als kritisch zu betrachten, oder sogar unzulässig. Zudem bietet die ungeschützte Verlegung der Leitungen in den Wänden keinen Schutz gegen elektromagnetische Strahlung. Bei der klassischen Unterputzinstallation besteht bei Datenleitungen für Computernetzwerke, die beispielsweise innerhalb von Gebäudeaußenwänden verlaufen, die latente Gefahr, dass sie von Unbefugten abgehört werden können.

Die Nachteile der eingeschränkten Flexibilität bei der Unterputz-Installation haben zu dem weit verbreiteten Einsatz von Brüstungskanälen geführt. Dies beschränkt sich jedoch fast ausschließlich auf den Einsatz in Zweckgebäuden wie Büro- oder Verwaltungsbauten oder Industriegebäuden. Aufgrund des großen Querschnitts der Kanäle und deren kastenförmiger, variantenloser und wuchtiger Formgebung wird die Installationsweise mit marktüblichen Brüstungskanälen im Wohnbereich sowie in optisch anspruchvolleren Umgebungen nicht akzeptiert. Zudem geht Stellplatz für Möbel an den Wänden verloren, wenn die Wand durch die horizontal verlaufenden, vorstehenden Kanäle geteilt ist.

Änderungen an der Installation sind zwar mit den Brüstungskanälen möglich, da der Einbau der Steckdosen und Schalter bei der üblichen Installationsweise mit Unterputz-Geräten aber nur durch Fachkräfte ausgeführt werden darf, werden diese Maßnahmen aus Kostengründen oder organisatorischen Schwierigkeiten in der Praxis oft nicht ausgeführt. Werden metallische Brüstungskanäle verwendet, so sind bei dem üblichen Einsatz von Unterputz-Steckdosen alle Kanalteile in sehr aufwendige Schutzleiter- Erdungsmaßnahmen einzubeziehen, damit beim Öffnen der Kanäle von den dann offen zugänglichen Metalltragringen der Steckdosen keine Gefahr ausgeht. Diese Erdungsmaßnahmen schaffen jedoch nur einen Schutz im Fehlerfalle gegen elektrische Spannungen. Für einen Schutz gegen hochfrequente, elektromagnetische Strahlungen und gegen das unbefugte Abhören von Computernetzwerken sind die Erdungsmaßnahmen nicht geeignet.

Mit speziellen, voll gekapselten Kanalsteckdosen kann die Notwendigkeit einer Schutzleiter- Erdungsmaßnahme für Metallkabelkanäle zwar umgangen werden, die Vielfalt und Freiheitsgrade der elektrotechnischen Funktionen, die mit Standard-Unterputz Schalterprogrammen möglich sind, können diese Spezialgeräte jedoch nicht bieten.

Ein weiterer grundsätzlicher Nachteil der Brüstungskanalinstallation ist die Einschränkung, dass die Flexibilität sich nur auf die Steckdosen und Schalter beschränkt. Die Stromversorgung der notwendigen Leuchten wird nach wie vor überwiegend mit in den Wänden und Decken verlegten Leitungen und fest montierten Leuchten ausgeführt. Teure Alternativen sind eine Zwischendeckenkonstruktion mit austauschbaren Rasterelementen wie sie im Wesentlichen in Zweckgebäuden verwendet wird oder die Verwendung von Stromschienensystemen die häufig im Ladenbau eingesetzt werden.

Die Installation über die Sockelleiste hat sich bisher ebenfalls noch nicht im Wohnbereich durchgesetzt. Dies liegt daran, dass über die Sockelleiste keine Schalter und auch keine Leuchten angeschlossen werden können, so dass auf jeden Fall eine Unterputzinstallation notwendig ist.

Die auf den Sockelleisten aufgesetzten Steckdosenboxen dürfen wegen der Verwendung von festen Installationsleitungen auch nur von Fachkräften angeschlossen und verändert werden. Somit ergibt sich auch hier eine relativ starre Verkabelung und Steckdosenpositionierung, die nachträglich nur von Fachkräften ausgeführt und damit recht selten geändert wird. Für die erste planmäßige Einrichtung der Wohnung kann man die Steckdosenboxen noch an die richtige Position bringen. Bei einer Ummöblierung werden die dann frei sichtbaren Boxen aufgrund ihrer Größe zu einem optisch störenden Element.

Handelt es sich um einen Neubau oder eine umfangreiche Sanierung, dann kann die Sockelleisteninstallation durch RIS Verteiler Punkte ergänzt werden. Mit diesem Prinzip werden im Bodenbereich Verteilpunkte für Strom und Datenanschlüsse gesetzt, die dann über weiterführende Installationsleitungen, die in der Sockelleiste geführt werden, an die gewünschten Raumpositionen gebracht werden. Alle nachträglichen Änderungen werden nur noch von dem RIS Punkt ausgeführt. Die Installation bis zu diesem Punkt bleibt unverändert. Obwohl sich ein deutlicher Flexibilitätsgewinn erzielen lässt, hat auch die Installation mit RIS Punkten verschiedene Nachteile. Wie bei allen anderen Installationswesen bedarf es eines Fachmannes um mögliche Änderungen vorzunehmen. Das RIS Prinzip beschränkt sich auf Neubauten oder komplette Sanierungen, bei denen ein neuer Boden oder Estrich erstellt wird. Die Installation bis zu dem RIS Punkt hat zwangsläufig im Boden zu verlaufen, was zu Konflikten mit anderen Gewerken, z.B. Fußbodenheizungen, führen kann. Und die in jedem Raum notwendigen RIS Punkte sind aufgrund ihrer Größe und der Notwendigkeit, dass sie zugänglich und damit sichtbar bleiben, bei optisch anspruchvollen Raumgestaltungen wenig beliebt. Wie bei allen anderen Installationsweisen bietet auch die Installation mit RIS Punkten keine Möglichkeit zur variablen Raumversorgung mit Lichtpunkten und Leuchtkörpern.

Die sich aus diesen Mängeln ergebende technische Aufgabe besteht darin, Vorrichtungen und systembedingte Installationsverfahren zu entwickeln, welche eine verbesserte Flexibilität zur variablen und reversiblen Installation von Steckdosen und Schaltern und zudem auch von Leuchtmittel und weiteren, mit elektrischem Strom versorgten Komponenten bieten. Weiterhin soll eine verbesserte EMV-Schirmung gewährleistet sein und die zu konzipierenden Installationskomponenten sollen eine anspruchsvolle optische Gestaltung zulassen, so dass diese auch als Raumgestaltungselemente eingesetzt werden können. Insbesondere eine Erweiterung bestehender Unterputzinstallationen muss mit den Vorrichtungen möglich sein. Eine weitere Anforderung besteht darin, auch Nichtfachkräften es zu erlauben und ermöglichen, nach einer von Fachkräften vorgenommenen Erstinstallation, die gewünschten Positionsänderungen oder Ergänzungen mit Steckdosen, Schaltern oder anderen Anschlüssen selbst vorzunehmen.

Diese Aufgabe wird dadurch gelöst, dass die gemäß Patentanspruch 1 und den Unteransprüchen beschriebenen erfindungsgemäßen Systemkomponenten und systembedingten Installationsverfahren für die flexible Installation von Energie- und Datenleitungen , sowie von ergänzenden Systemkomponenten konzipiert und eingesetzt werden.

Beschreibung : Die vorliegende Erfindung besteht aus Säulenelementen, 10, 20, 30 welche raumhoch an zentralen Stellen in gewerblichen Zweckräumen oder Wohnräumen wie z.B. im Flur oder in der Küche oder im Wohnzimmer auf die Wand montiert werden und die Aufnahme, Ergänzung und Wegnahme von Steckdosen 80, Bedienfeldern, Wandleuchten, Lautsprechern und weiteren Funktionselementen ermöglichen. Die raumhohen Säulen bilden die Funktionsbereiche in den Gebäuden. Als wesentliches Merkmal stellen sie Funktionsbereiche dar welche ergänzend zu der technischen Funktion durch die künstlerische Ausgestaltung auch raumgestaltende Elemente darstellen. Was bisher durch Unterputzinstallation weitgehend versteckt wurde, wird durch die Verwendung der erfindungsgemäßen Vorrichtungen raumgestaltend in Szene gesetzt. Diese Aufgabe hat zur Folge, dass die Größe und die Proportionen der Säulen 10, 20, 30 neben den technischen Erfordernissen sehr stark optischen Gesichtpunkten unterliegen, welche deshalb bestimmenden Einfluss auf die Konstruktion der Einbau- und Anbauteile haben.

Ergänzt werden die Säulen 10, 20, 30 mit am Boden 61 und/oder unter der Decke verlaufenden horizontalen, auf der Wand 60 montierten Verbindungsleisten 40, welche die Funktionsbereiche der Räume miteinander verknüpfen. Diese Verbindungsleisten 40 sind lediglich zur Führung von Leitungen gedacht und können daher mit kleinem Querschnitt ausgeführt werden. Die Leisten unterliegen hierbei den gleichen Designmerkmalen wie die Säulen 10, 20, 30. Im Zusammenspiel wird eine ganzheitliche, visuelle Raumgestaltung erreicht, da in und mit dem System alle in einem Raum positionierten Schalter, Steckdosen 80 und weiteren Funktionselemente integriert werden können.

An jeder beliebigen Stelle können an die Verbindungsleisten wiederum Säulenelemente 10, 20, 30 im gleichen Design angedockt werden, welche in unterschiedlicher der Höhe ausgeführt sein können. Diese variablen Säulen 10, 20, 30 können jederzeit wieder an anderer Stelle montiert werden.

Die Säulen 10, 20, 30 und die Verbindungsleisten 40 bestehen aus Grundprofilen 11, 21, 31, 41, die komplett von Abdeckungen 12, und 42 verschlossen werden. Ein wesentliches Designmerkmal ist, dass die Grundprofile 11, 21, 31, 41 von vorne nicht mehr sichtbar sind. Dies ermöglicht eine optische Varianz der Säulen 10, 20, 30 und Verbindungsleisten 40 nur durch Austausch der Abdeckungen 12, 42.

Neben der Aufnahme von Schaltern und Steckdosen 80 ermöglicht das System die Integration von lichttechnischen Komponenten wie LEDs, LED-Streifen 70 und OLEDs oder auch herkömmliche Leuchtmittel wie Glühlampen oder Leuchtstoffröhren zur indirekten und direkten Raumbeleuchtung. Es besteht die Möglichkeit, typische Wandleuchten an dem Säulen-Grundprofil 11, 31 mit Abstrahlrichtung zur Raummitte oder zur Decke und Boden zu montieren. Die Leuchten können hier entweder als eigenständige Designelemente hervortreten oder in die Gesamtdesignlinie der Säulen und Leisten mit einbezogen werden. Eine weitere Möglichkeit zur indirekten Beleuchtung wird durch eine Montage von Lichtkomponenten 70 an der Seite der Säulengrundprofile 11, 21, 31 gegeben. Durch die übergreifende Säulenabdeckung 12 kann der Leuchtenkörper verdeckt werden, so dass je nach Einsatz von Strahlern oder Lichtleisten unterschiedliche und besondere Lichteffekte an Wand 60 oder Decke möglich werden.

Das Designmerkmal der übergreifenden Abdeckungen. 12 ermöglicht als zusätzliche Varianz bei Neubauten oder Komplettsanierungen die Integration der Säulen und Leisten flächenbündig in die Wand 60 oder Decke. Die Grundprofile 11, 21, 31 werden wandbündig eingebaut. Die übergreifenden Abdeckungen 12 kaschieren den Übergangsbereich zwischen Profil und Wand 62 oder Decke.

Zudem sind die Säulen mit verschiedenen, rückseitigen Ausschnitten 14 so vorbereitet, dass mit einer Aufputzmontage der Einsatz zur Erweiterung bestehenden Unterputzinstallationen möglich wird, ohne in die bestehende Installation einzugreifen.

Das Installationsverfahren sieht nun vor, dass die Steckdosen 80 und Schalter und andere elektrischen Komponenten im Gegensatz zu einem Brüstungskanalsystem nur in vertikale Säulen 10, 30 eingebaut werden. Dadurch wird eine komplett neuartige, wesentlich harmonischere Raumwirkung erzielt. Die raumhohen Säulen 10, 30 heben die Funktionsbereiche der Räume hervor und werden deshalb in der Wohnung oder dem gewerblichen Gebäude dezentral an den Positionen montiert, welche fest mit Schaltern und/oder Steckdose ausgestattet werden sollen, z.B. im Flur oder neben Türen.

In den Säulen sind Installationsboxen 51, 52 aus elektrisch isolierendem Material montiert, welche vielfältige Aufgaben haben.

Die erste Aufgabe ist die Funktion einer Schnittstellenbox 51, welche den Abschluss der festen Installation darstellt. In der Schnittstellenbox 51 enden die vom Gebäude- oder Etagenverteiler kommenden Installationsleitungen für die Energie- und Datenversorgung. Diese Boxen 51 werden bei der Erstinstallation von Fachkräften angeschlossen. Da die Säulen 10, 30, die die Funktionsbereiche der Räume bilden, nicht mehr verändert werden, kann auch die Installation bis zu den Schnittstellenboxen 51 dauerhaft unverändert bleiben. Die Schnittstellenboxen 51 können sich sowohl im unteren Bereich der Säulen 10, 30 befinden, wenn die Installation über den Boden 61 erfolgt, oder im oberen Bereich der Säulen 10, 30, wenn die Installation von der Decke kommt.

Die Schnittstellenboxen 51 sind dann stirnseitig mit berührungsgeschützten Steckbuchsen für die Weiterführung des Energie und Datennetzwerkes innerhalb der Säule 10, 30 mit flexiblen, steckfertig vorkonfektionierten Leitungen ausgerüstet. Die Schnittstellenboxen 51 liegen im Inneren der Säulen 10, 30 und werden mit den Abdeckungen 12 komplett verdeckt.
Die Schnittstellenbox 51 stellt in ihrer passiven Ausführung den Übergang von der festen, vom Fachmann auszuführenden Verkabelung zu einer flexiblen, auch vom Laien veränderbaren Installation dar. Die Schnittstellenbox 51 kann weiterhin aktive Komponenten wie Netzteile, Trafos oder Miniswitches aufnehmen. Auch die Aufnahme eines Access Point für WLAN Netze wird möglich, wenn die Antenne aus der Box ausgeführt wird. Damit erhält die Schnittstellenbox 51 zudem die Funktion eines Medienkonverters. Eine andere Variante stellt die Bestückung mit Störfiltern oder EMV-Schutzelementen und/oder mit Überspannungs-Schutzelementen in bekannter Technologie dar. Eine bislang noch nicht realisierte Funktion eines dezentralen Raumschutzes wird somit möglich. Im Gegensatz zu dem aufwendigen und teuren Gerätefeinschutz von marktüblichen Überspannungsschutzkonzepten, welcher direkt an jeder Steckdose angebracht werden, bietet diese neue Variante des Raumschutzes eine kostengünstige Alternative, da alle Geräte, die nachfolgend angeschlossen werden, mit nur einer Schutzkomponente abgedeckt sind. Ausgestattet mit akustischen Signalgebern sind die Schutzfunktionen zudem komplett verdeckt in den Säulen positioniert, so dass ihr Einsatz nicht wie bei den heute üblichen Komponenten an der optischen Gestaltung scheitert.

Eine weitere Funktion der Installationsboxen, ist die Aufnahme von handelsüblichen Schaltern und Steckdosen 80, sowie von weiteren elektrischen Komponenten in unterschiedlichen Kombinationen. In dieser Funktion als Gerätebox 52 kann die Box nach dem Einbau der Geräte so verschlossen werden, dass sie einen vollständigen Berührungsschutz der elektrischen Geräte gewährleistet. Sie kann außerhalb der Säulen 10,30 komplett mit marktüblichen Unterputzschaltern und -Steckdosen (80) bestückt werden. Dies kann industriell oder durch Fachkräfte an Ort geschehen. Komplett bestückt und geschlossen besteht nun auch für Nichtfachkräfte die Möglichkeit zur Montage und Demontage der Geräteboxen in den Säulen.

Durch den vollständigen Berührungsschutz, der durch die Gerätebox 52 herbeigeführt wird, entfällt die Notwendigkeit der Schutzerdung von metallenen Teilen, wie sei z.B. die Säulen in Aluminiumausführung darstellen, was eine erhebliche Montageerleichterung darstellt und Grundvoraussetzung zur Montage durch Nichtfachkräfte ist. Dennoch sind die Säulen 10, 20, 30 mit einer Befestigungs-Nut 16 zum Anbringen von Schutzleiter- Erdungskomponenten ausgestattet, damit auch der Einsatz im Falle eines notwendigen Potenzialausgleichs und/oder bei gefordertem Schutzleiteranschluss möglich ist. In diesem Ausnahmefall darf das System jedoch nur von einer Elektrofachkraft installiert werden.

Die Gerätebox 52 wird mit flexiblen Kabeln, passend zu den eingesetzten Steckdosen 80 oder Schaltern vorkonfektioniert. Die Stecker an den Kabeln sind die Gegenstücke zu den Steckbuchsen der Schnittstellenboxen 51. Der Austausch von Geräteboxen 52 ist mit diesem Verfahren auch für Nichtfachkräfte möglich, nachdem die Schnittstellenbox 51 ordnungsgemäß installiert ist. Die Weiterführung der Installation von der Schnittstellenbox 51 gilt nun nicht mehr als feste Installation so dass auch die einschränkenden Bestimmungen für Kabelkanalinstallationen nicht beachtet werden müssen. So darf beispielsweise die Abdeckung der Säulen 12 und der Verbindungsleisten 42 im Gegensatz zu Brüstungskanal- oder Sockelleistenkanalinstallationen auch von Nichtfachkräften entfernt und ausgetauscht werden.

Das Installationsverfahren sieht nun verschiedene Arten der Verbindung der Geräteboxen 52 mit den Schnittstellenboxen 51 vor. In einer sternförmigen Topologie können einzelne Geräteboxen 52 als Endpunkte der Installation an die Schnittstellenbox 51 angeschlossen werden. Die Schnittstellenbox 51 stellt hier eine Art Hub dar. Die Geräteboxen 52 besitzen für die Variante nur Kabel mit Eingangsanschlüssen. Es ist aber auch möglich, dass in einer Bustopologie die Geräteboxen 52 miteinander verkettet werden. Bei dieser Variante besitzen die Geräteboxen 52 Eingangs- und Ausgangskabel. In Untervarianten können bei den Geräteboxen 52 die Eingangs- und Ausgangskabel auf der gleichen Stirnseite oder auf den gegenüberliegenden Stirnseiten ausgeführt sein.

In weiteren Ausführungen werden die Säulen auch als flache Kanäle nur zur Leitungsführung 20 oder als Eckvarianten 30 ausgeführt. Besonders die flache Ausführung eignet sich zudem zur sichtbaren Weiterführung einer raumhohen Säule 10, 20, 30 an der Decke. Dies dient der Versorgung von Deckenleuchten oder zur Überbrückung des Raumes von einer Säule zur gegenüberliegenden Seite.

Eine Weiterführung der flexiblen Installationsleitungen aus der Säule 10, 20, 30 kann mit dem System zudem über die an der Wand 60 in Bodenhöhe 61 oder Deckenhöhe angebrachten Leisten 40 an jede beliebige Wandposition des Raumes erfolgen. Ausgehend von den Schnittstellenboxen 51 oder den Ausgangskabel der Geräteboxen 52 in den Säulen 10, 30 werden flexible, mit Steckern oder Buchen vorbereitete Kabel aus der Säule 10, 30 in die Leisten 40 überführt.

Die Verbindungsleiste 40 ist so ausgeführt, dass sich in ihrem Innenraum die flexiblen Leitungen zur Verlängerung mittels Stecktechnik 71 zusammenstecken lassen. Da hier eine parallel Kabelführung von Energie- und Datenleitungen über eine längere Distanz möglich ist, ist das Grundprofil der Leiste mit einem Trennsteg 18 ausgestattet, wie es die Norm EN50174 ab einer parallelen Kabelführung über eine Strecke von dreißig Meter vorschreibt, so dass die gegenseitigen Störbeeinflussungen minimiert werden.

Aus den Verbindungsleisten 40 ist an jeder beliebigen Raumposition eine verdeckte Ausführung der flexiblen Leitungen aus dem Grundprofil 41 möglich, welche von der Schattenfuge 43 der übergreifenden Abdeckung 42 geschaffen wird.

Mit diesem Prinzip ist es möglich, vorkonfektionierte Geräteboxen 52 an beliebigen Stellen im Raum zu montieren und diese Positionen jederzeit wieder zu verändern. Die flexiblen Leitungen der Geräteboxen 52 werden an einer beliebigen Stelle in die Leisten 40 eingeführt und innerhalb der Leiste 40 mit Leitungen, die von Schnittstellenboxen 51 kommen, zusammengesteckt. Auch diese Tätigkeit erfordert keine Fachkraft.

Die geometrische Ausführung der Verbindungsleisten 40 mit Schattenfuge 43 ermöglicht es weiterhin mit LED Technik ausgerüstete LED-Streifen , Lichtbänder oder Lichtleisten 70 so anzubringen, dass eine indirekte Lichtführung in den Räumen ermöglicht wird. Dies kann z.B. als Effektbeleuchtung mit wechselnden Farben eingesetzt werden oder als Orientierungslicht mit Sicherheitsfunktion oder als punktuelle Anstrahlung von an der Wand befindlichen Objekten oder Bildern.

Die Säulen 10, 20, 30 und Verbindungsleisten 40 der erfindungsgemäßen Vorrichtung/en können in verschiedenen Materialien ausgeführt werden um unterschiedlichen technischen und optischen Gestaltungs-Ansprüchen gerecht zu werden. Eine Ausführung in Kunststoff stellt die preiswerte Basisvariante dar. Bei höheren optischen Anforderungen ist es durch die besondere, gradlinige Geometrie der Profile sowie wegen dem Merkmal der übergreifenden Abdeckungen 12, 42, möglich, die Kunststoffprofile mit neuartigen Folien aus echtem Aluminium zu überziehen, da der Verschlussbereich der Profile 17 nicht mit Folie überzogen werden muss. Dadurch wird die Materialwirkung und Haptik von echtem Metall erreicht. In weiteren Ausführungsformen können die Profile komplett aus Aluminium hergestellt und mit unterschiedlichen Oberflächen wie z.B. mit Eloxal oder Pulverlack beschichtet werden.

Die Ausführung komplett aus Metall bietet zudem die Möglichkeit in besonderen Anwendungsfällen das System für die Abschirmung von elektromagnetischer Strahlung oder zum Schutz von Computer- und Datenleitungen gegen das unbefugte Abhören aufzurüsten. Dazu ist eine zumindest partielle Chromatierung im Verschlussbereich der Profile 17 sowie die Verwendung von leitfähigen Polymeren, Gummischläuchen oder Metallgeweben bzw. Metallgewebeschläuchen notwendig. Die Geometrie der Verschlusskontur der Profile 17 ist so ausgeführt, dass die leitfähigen Gummischläuche einfach in den chromatierten Verschlussbereich eingebracht werden und einen flächigen Kontakt zwischen Grundprofil 11, 21, 31 und Abdeckung herbeiführen 12, so dass mit dem Profil 10, 20, 30 ein komplett geschossenes, hochfrequenzdichtes Metallgehäuse um die zu schützenden Kabel gebildet wird. In dieser Ausführung wird durch die vorliegende Erfindung eine konsequente Umsetzung EMV gerechter, geschirmter Installation möglich. Ökologische und alternative Bauweisen können mit einer feldfreien Installation ohne Elektrosmog realisiert werden.

Soll zusätzlich zu der Abschirmung elektrischer Felder auch die Abschirmung magnetischer Felder gefordert werden, können die Profile 11, 21, 31 und Abdeckungen 12 in Stahl/Eisen ausgeführt werden. Eine weitere Variante zur Abschirmung magnetischer Felder kann dadurch realisiert werden, dass die Funktionsboxen 51, 52 im Inneren mit selbstklebenden MU-Metallfolien ausgeschlagen werden. Den höchsten Grad der magnetischen Abschirmung wird durch die vollständige Gestaltung der Profilelemente 11, 21, 31 und der Abdeckungen 12 durch MU-Metall erreicht. Die vollständige Gestaltung der Profilelemente aus MU-Metall dürfte jedoch nur für spezielle Anwendungsfälle, beispielsweise in sicherheitsrelevanten Einrichtungen realisierbar sein, bei welchen die doch erheblichen Kosten dieses Materials gerechtfertigt erscheinen.

Bei einer weiteren Variante wird lediglich partiell die Funktionsbox 51, 52 außen mit MU-Metall versehen und die Verkabelung mit abgeschirmten Kabeln ausgeführt, deren Ferrit-Mehl enthaltene Außenisolierung einen zusätzlichen EMV Schutz auch gegen magnetische Beeinflussung bietet.

Ausführungsbeispiele: Die vorliegende Erfindung kann beispielsweise in einer Ausführung realisiert werden, die im Wesentlichen aus sieben Teilen besteht. Es handelt sich in diesem Beispiel um eine Schnittstellenbox 51 und eine Gerätebox 52 sowie eine Wandsäule 10 und eine Ecksäule 30 in welche die Schnittstellenbox 51 und die Gerätebox 52 einbaubar sind. Dazu besteht die Erfindung noch aus einer flachen Leitungsführungssäule 20 und einer Verbindungsleiste 40. Alle Profile können mit Lichtführungselementen 70 ausgestattet werden.

Die Gerätebox 52 besteht aus einem im Wesentlichen U-förmigen Profil 55 welches an den äußeren Enden eine Verschlusskontur 58 besitzt. In diese Verschlusskontur 58 werden aneinandergereiht Trägerplatten oder Tragringe 81 eingerastet oder eingeschoben, die für jeweils ein, zwei oder drei Gerätemodule ausgelegt sind, oder die mit Funktionseinsätzen 82 aus handelsüblichen Unterputzschalterprogrammen bestückt sind. Komplettiert wird die Box mit einem Abdeckprofil 56 welches in die Verschlusskontur des U-Profils 55 verrastet und mit stirnseitigen Endplatten 53, die vorbereitete Öffnungen für die Einführung von Installationskabeln besitzen und die so geformt sind, dass sie einen Mechanismus zur Verrastung der kompletten Gerätebox 54 innerhalb der Funktionssäulen 10, 30 besitzen.

Die Abdeckung 56, die Endplatten 53 und das U-Profil 55 sind aus Kunststoff und sind so ausgeführt, dass bei eingebauten Gerätemodulen 82 der Installationsraum der Box 52 vollständig geschlossen und kein metallisches Teil zugänglich ist, wodurch der Berührungsschutz realisiert wird. Dazu ist das Abdeckprofil 56 mit Ausschnitten versehen, aus denen nur die isolierten Bereiche der Funktionsmodule oder Funktionseinsätzen 83 durchtauchen. Je nach Anforderung lassen sich komplettierte Einheiten mit einer beliebigen Kombination von Schalter- oder Steckdosenmodulen (80) realisieren. Als besonderes konstruktives Merkmal der Box 52 ragen die Funktionseinsätze 83 mindestens zwei Millimeter aus der Box 52 heraus. Damit wird es möglich, dass die Box 52 so in die Säulen 10, 30 montiert wird, dass die Säulenabdeckung 12 mit Ausschnitten 50 versehen ist, aus denen die Schalter- und Steckdosenmodule 83 ebenfalls herausragen. Der Installationsablauf sieht vor, dass Funktionsmodule zunächst in die zugehörige Trägerplatte eingerastet werden oder handelsübliche Unterputzgeräte mit Tragringen 81 verwendet werden. Danach werden die Module oder Geräte 82 mit den passenden Anschlussleitungen kontaktiert, welche durch die Endplatte 53 durchgeführt sind. Die Anschlussleitungen können am anderen Ende mit vorkonfektionierten Steckern ausgestattet sein. Die verdrahteten Module oder Geräte 82 werden nun mit ihren Trägerplatten oder Tragringen 81 nacheinander in das Profil 55 eingerastet oder eingeschoben. Danach wird die Box 52 mit dem Abdeckprofi 56 und den Endplatten 53 verschlossen und mittels des Verrastmechanismus 54, der sich an den Endplatten befindet, in der Funktionssäule 10, 30 verrastet.

Die Schnittstellenbox 51 besteht aus dem gleichen U-förmigen Profil 55 wie die Gerätebox 52. Das U-Profil 55 wird mit dem Abdeckprofil 56 komplett verschlossen. Die Einführung der Installationsleitungen erfolgt auf einer Stirnseite durch die auch bei der Gerätebox 52 verwendete Endplatte 53. Die gegenüberliegende Endplatte 53 kann mit besonderen Ausschnitten versehen sein, in die Snap-In Steckverbinder Module für die Energie- und/oder Dateninstallation eingerastet werden. Diese Snap-In Module werden innerhalb der Box 51 mit den Installationsleitungen kontaktiert. Außerhalb der Box stehen an den Snap-In Modulen die entsprechenden elektrischen Signale und Spannungen zur steckbaren Weiterführung mittels flexiblen Leitungen zur Verfügung. Alternativ kann die Schnittstellenbox 51 mit vorkonfektionierten Kabeln und angeschlossenen Steckern ausgestattet sein. Für individuelle Schaltungen und Anwendungen kann die Schnittstellenbox 51 mit verschiedenen elektronischen Komponenten wie beispielsweise Transformatoren, Schaltrelais oder Ein- und Ausgangsmodulen für Bussteuerungen oder Miniswitches bestückt werden. Der Aufbau der Box 51 mit dem U-Profil 55 ermöglicht es, die Box 51 in beliebigen Längen herzustellen.

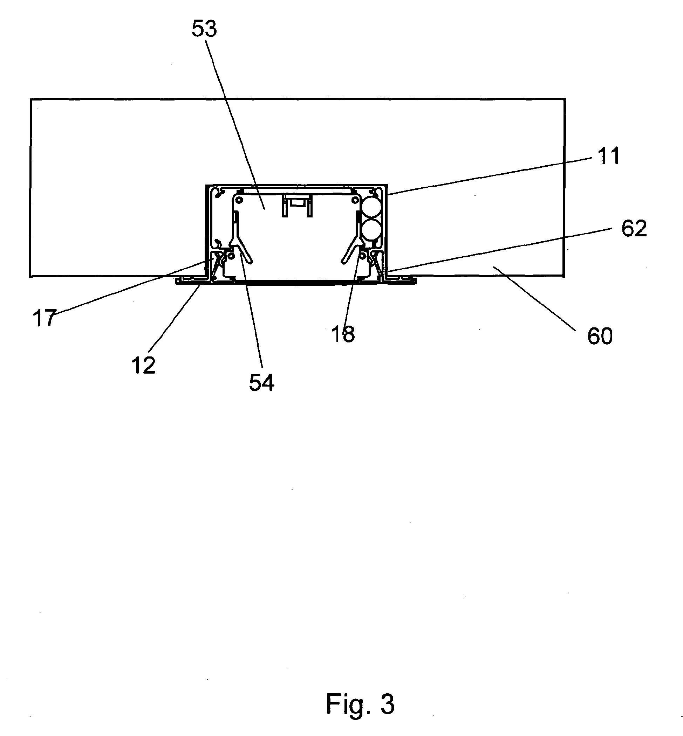

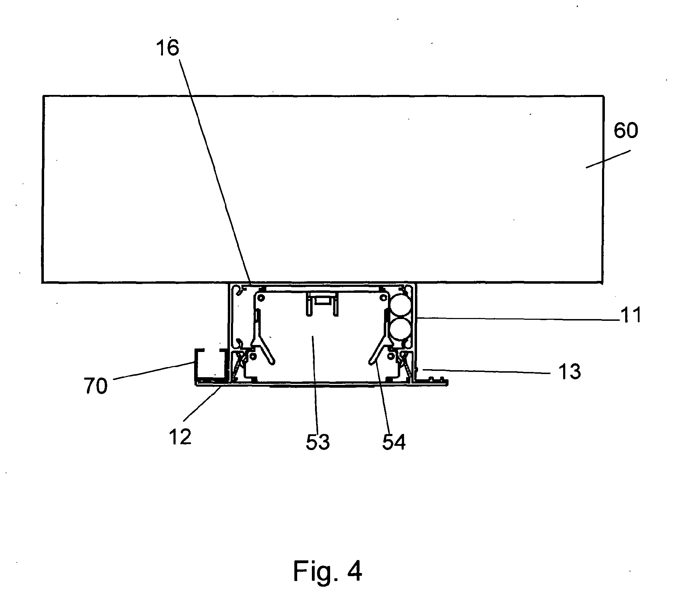

Die Wandsäule 10 besteht aus einem metallischen Grundprofil 11, welches eine U- Form mit beidseitigen Abkantungen darstellt. An den beiden Schenkeln sind im oberen Bereich Verschlusskonturen 17 angeformt, die das Verrasten des ebenfalls metallischen Abdeckprofils 12 ermöglichen. Ein auf beiden Seiten an die Verschlusskontur 17 angeformter, nach innen stehender Steg 18, ermöglicht darüber hinaus die Befestigung der Gerätebox 52 und der Schnittstellenbox 51 in der Wandsäule 10 mittels Schnapphaken 53. Die Wandsäule 10 besitzt im unteren Bereich eine Ausklinkung der Seitenschultern 15, passend zur Verbindungsleiste 40 der erfindungsgemäßen Vorrichtung. Weiterhin gibt es in der Wandsäule 10 eine Aussparung in der Rückwand 14. Diese ist so ausgeführt, dass die Wandsäule 10 direkt über in der Wand 60 installierten Unterputzschaltern oder Unterputzsteckdosen montiert werden kann und damit eine vorhandene Installation innerhalb der Wandsäule 10 fortgesetzt werden kann. Bei einer wandbündigen Montage der Säule Fig. 3 dienen die äußeren Abkantungen des Grundprofils 11 als Anlage. Die Abkantungen werden bei einer Aufputzmontage Fig. 4 benutzt, um mittels dahinter befestigter Lichtleisten 70 eine indirekte, linienförmige Beleuchtung herbeizuführen. Die Abkantungen werden vollständig von der Profilabdeckung 12 überdeckt. Es entsteht eine ganz glatte Oberfläche ohne die bei normalen Brüstungskanälen üblichen Längsfugen. Passend zu den Funktionselementen der Gerätebox 52 wie Schalter- oder Streckdosenmodule 83 oder Leuchten besitzt die Säulenabdeckung die entsprechenden Ausschnitte 50.

Die Ecksäule 30 und die Leistungsführungssäule 20 werden mit der gleichen Abdeckung 12 wie die Wandsäule 10 verschlossen. Auch die seitlichen Abkantungen, die Verschlusskontur 17 sowie der Steg 18 für die Befestigung der Gerätebox 52 sind entsprechend der Wandsäule 10 ausgeführt. Die Leitungsführungssäule 20 besitzt die gleiche Bautiefe wie die Verbindungsleiste 40. Die Ecksäule 30 ist so geformt, dass die Verbindungsleisten 40 bei der Eckmontage hinter den Abkantungen in die Ecke geführt werden. Dazu besitzt die Ecksäule 30 im unteren Bereich Ausklinkungen der Seitenschultern. Bei der Aufputzmontage der Ecksäule und der Leitungsführungssäule kann die Lichtleiste 70 ebenfalls hinter die Abkantungen montiert werden.

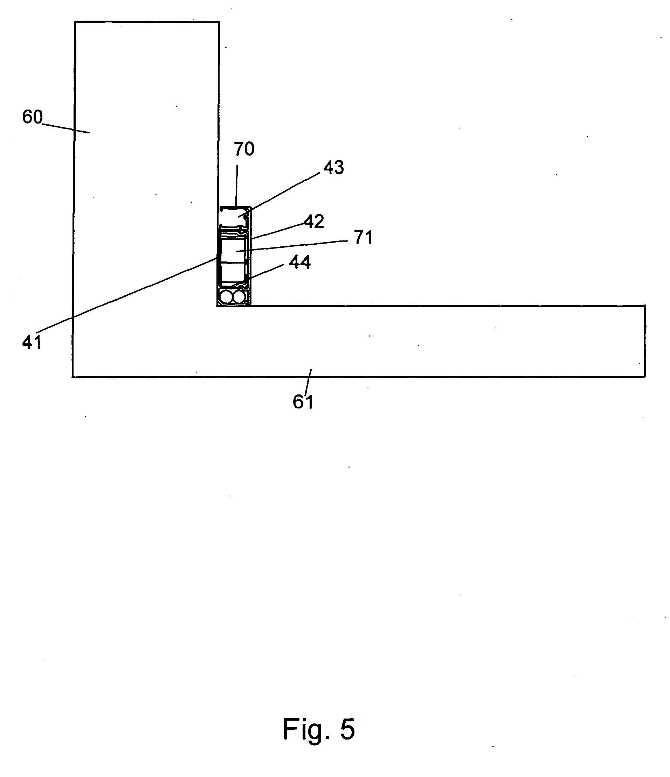

Die Verbindungsleiste 40 wird horizontal als Sockelleiste oder als Galerieleiste verwendet. Sie besteht aus einem Grundprofil 41 aus Kunststoff mit zwei Kammern, welches von einem Doppel-T förmigen Abdeckprofil 42 aus Metall abgedeckt wird. Die Kammergrößen sind so gewählt, dass innerhalb der Verbindungsleiste die Stecker und Buchsen 71 von handelsüblichen, flexiblen Leitungen zusammengesteckt werden können. Bei der Aufputzmontage der Verbindungsleisten Fig 5 entsteht eine Schattenfuge 43, in welcher die Lichtleiste 70 montiert werden kann. Ebenso kann die Schattenfuge 43 als Kaschierung des Wandanschlussbereiches bei einer wandbündigen Montage dienen. Aus vorbereiteten Öffnungen in der verdeckten Schulter der Abdeckung 42 können bei der Aufputzmontage die innerhalb der Verbindungsleiste 40 geführten Leitungen aus der Leiste herausgeführt werden.

Die Lichtleiste 70 ist als transparentes, C-förmiges Kunststoffprofil ausgeführt, in das handelsübliche LED-Streifen eingebracht werden können. Es wird so hinter die Abkantungen der Wandprofile 10, 20, 30 oder der Verbindungsleiste 40 montiert, dass die Öffnung gegen die Wand gerichtet ist.

### Figurenaufzählung / Aufzählung der Zeichnungen

Anhand der Zeichnungen werden das Installationsprinzip der Erfindung und die zugehörigen Vorrichtungen dargestellt. Es zeigen jeweils rein schematisch:

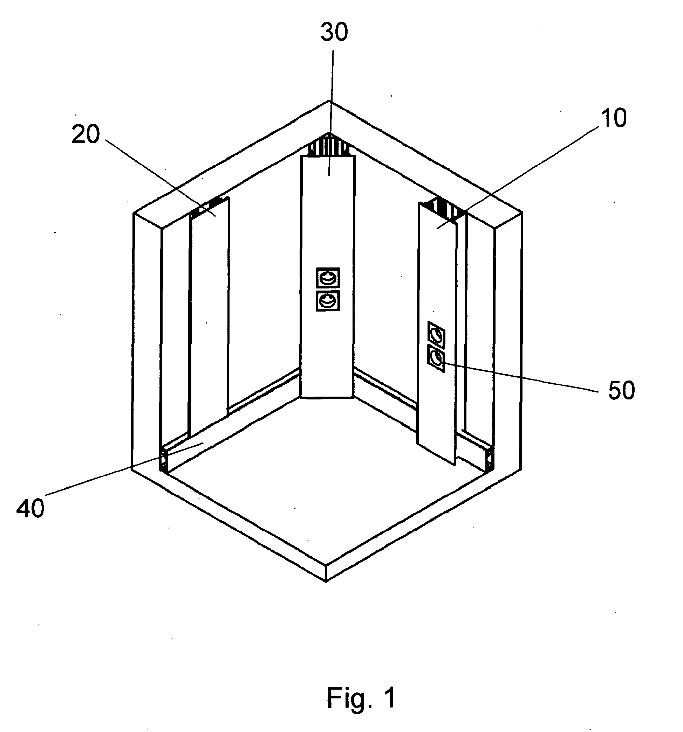

Fig 1: Anordnung der Säulen 10, 20, 30 und Verbindungsleisten 40 im Raum, geschlossen. Die erfindungsgemäßen Vorrichtungen des Systems werden in ihrer prinzipiellen Raumanordnung gezeigt. Man erkennt die fugenlose Designlinie sowie die Ausschnitte 50 für die Funktionselemente.

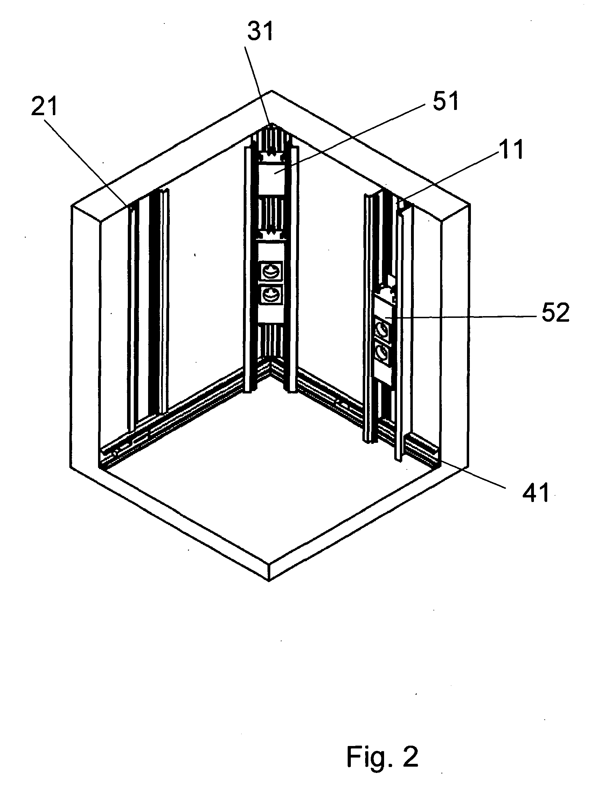

Fig 2: Anordnung der Grundprofile 11, 21, 31, 41 im Raum, offen ohne Abdeckung mit sichtbarer Schnittselenbox 51 und Gerätebox 52. Man erkennt die Anordnung der Schnittstellenbox 51 im oberen Säulenbereich sowie die Positionierung der Gerätebox 52 im mittleren Bereich.
Fig 3: Querschnitt einer Wandsäule 10, eingebaut in eine Wand 60. Man erkennt in der Ansicht ebenfalls die Endplatte 53 einer Funktionsbox, die mit dem Verrastmechanismus 54 zur Befestigung am Steg der Wandsäule 18 ausgestattet ist. Weiterhin ist erkennbar wie das Grundprofil der Wandsäule 11 durch seine Verschlusskontur 17 mit der Abdeckung 12 zusammengerastet ist. Der Übergangsbereich zwischen Wand und Profil 62 wird durch die Abkantung des Grundprofils 11 abgedeckt.
Fig 4: Querschnitt einer Wandsäule 10, aufgebaut auf eine Wand 60. Man erkennt in der Ansicht ebenfalls die Endplatte 53 einer Funktionsbox, die mit dem Verrastmechanismus 54 zur Befestigung am Steg der Wandsäule 18 ausgestattet ist. Weiterhin ist die Erdungsnut des Grundprofils 16 erkennbar. Bei der Aufputzmontage wird von der Abkantung des Grundprofils 11 eine Schattenfuge 13 gebildet, in die ein Lichtführungselement 70 montiert werden kann.
Fig 5: Querschnitt einer Verbindungsleiste 40 mit Lichtführungselement 70 montiert als Sockelleiste am Übergang zwischen Boden 61 und Wand 60. Man erkennt das in die von der Abdeckung 42 gebildete Schattenfuge 43 montierte Lichtführungselement 70. Weiterhin ist erkennbar, dass das Grundprofil der Verbindungsleiste 41 mit einem Trennsteg 44 zur Trennung von Energie und Datenleitungen ausgestattet ist. In der oberen Kammer wird dabei ausreichend Platz für die Steckverbinder 71 der in der Verbindungsleiste verlaufenden, flexiblen Leitungen gebildet.

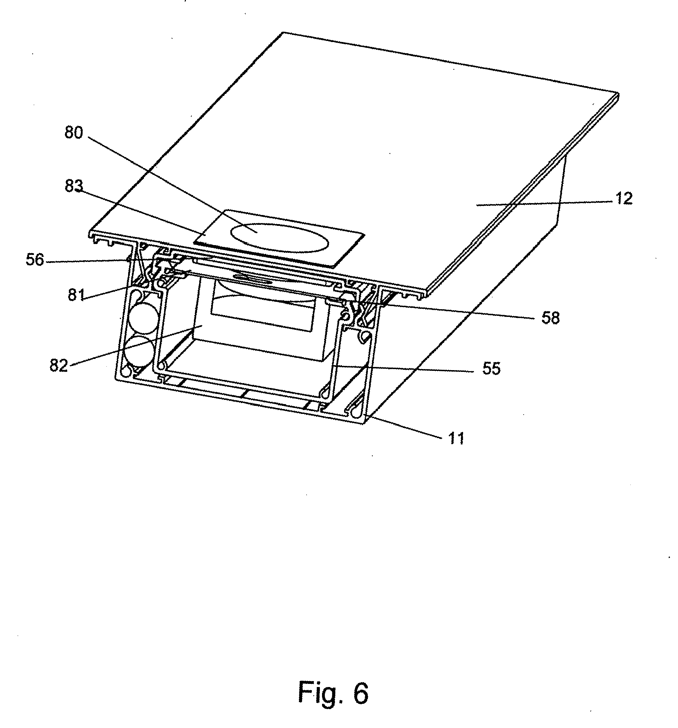

Fig 6: Wandsäule 10, geschlossen mit Gerätebox 52 für handelsübliche Schalter, Steckdosen und Leuchten 80. Man erkennt wie die Abdeckung 12 das Grundprofil 11 komplett überdeckt, so dass eine fugenlose Designlinie möglich wird. Die Zentraleinsätze der Steckdosen 83 tauchen durch die Abdeckung 12 durch. Im Inneren der Wandsäule 10 ist die Gerätebox erkennbar, die aus dem U-Profil 55 und der Abdeckung 56 besteht. Der Verschlussbereich des U-Profils 58 ist so gestaltet, dass die Funktionseinsätze 82 mit ihren Tragringen 81 in das Profil 55 eingeschoben werden können.

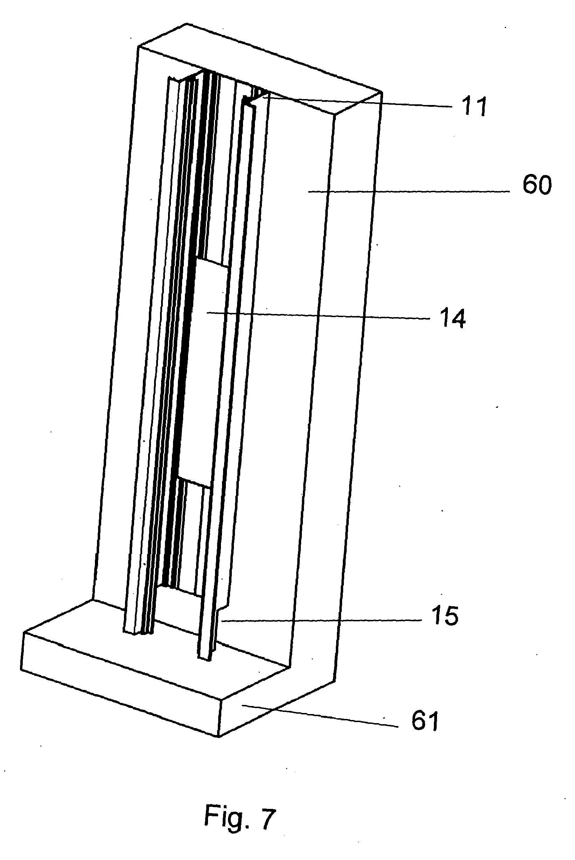

Fig 7: Grundprofil der Wandsäule 11 mit rückseitigem Ausschnitt 14 für Weiterführung einer Unterputzinstallation und mit Ausschnitt 15 zum Anschluss der Verbindungsleiste. Man erkennt bei der Montage auf der Wand 60, im mittleren Bereich der Säule die Aussparung 14 für die Einspeisung vorhandener Unterputzinstallationen sowie auf Bodenhöhe 61 die Aussparung 15 für den Anschluss der Verbindungsleiste 40.

## Patentansprüche

1. Vorrichtung zur Installation von Energie- und Datenkabeln, sowie von System-komponenten **dadurch gekennzeichnet, dass** dieses aus den folgenden funktionellen Komponenten besteht,
a) aus einer oder mehreren vorzugsweise vertikal montierten Säulen (10, 20, 30) zum Einsatz als mechanisches und optisches Raum-Funktionselement, vorzugsweise gefertigt aus Metall oder Kunststoff, zur Montage an/auf einer Wand als Wandsäule (10, 20)) oder in einer Raum-Ecke als Ecksäule/n (30), bestehend aus einem U-förmigen Grundprofil (11, 21, 31) mit rückseitigen Ausschnitten (14), welche die Einführung von Kabeln und Leitungen ermöglicht, die mittels Unterputzinstallationen installiert sind und an die Säule/n auf beiden Seiten Abkantungen angeformt sind, wodurch bei der Montage der Säule/n auf einer Wand beidseitig jeweils eine Schattenfuge (13) gebildet wird und/oder die Säule/n (10, 20, 30) in eine Aussparung der Wand flächenbündig eingebaut werden kann/können und die Säule/n mit einem, oder mehreren geteilten, abnehmbaren Abdeckung/en (12) versehen ist/sind, welche/s die Vorderseite der Säule/n inklusive der Abkantungen komplett umschließt/umschließen und mit Öffnungen (50) ausgestattet ist/sind durch welche nur die isolierten Funktionsbereiche (83) von Schaltern, Steckdosen und Leuchten durchtauchen, und die Säule/n (10, 30) so ausgeführt sind, dass eine oder mehrere elektrisch isolierende Funktionsbox/en (51, 52) eingebaut werden können und die vorzugsweise aus Kunststoff gefertigten Funktionsbox/en (51, 52) so ausgestaltet ist/sind, dass in diese/n Schalter, Steckdosen (80), Leuchten, Transformatoren und/oder elektronische Baugruppen eingebaut werden können,
b) und aus einer oder mehreren vorzugsweise horizontal montierten, Verbindungsleiste/n (40) zum Einsatz als mechanisches und optisches Funktionselement, zur Aufnahme von Elektro- und/oder Datenkabel besteht, und die Verbindungsleiste/n (40) vorzugsweise aus Metall oder Kunststoff gefertigt und so gestaltet sind, dass diese als Sockelleiste oder Galerieleiste an oder auf einer Wand (60) montiert werden können und die Verbindungsleiste/n (40) aus einem F-förmigen Grundprofil (41) bestehen welches so ausgeformt ist, dass zwei getrennte Installationskammern entstehen, wovon eine so ausgeführt ist, dass handelsübliche Steckverbinder (71) für flexible Installationsleitungen aufgenommen werden können, und die Verbindungsleiste/n (40) mit einer geteilten oder ungeteilten abnehmbaren Abdeckung (42) versehen ist/sind welche das Grundprofil (41) von drei Seiten vollständig umschließt und auf jeder Seite jeweils über eine Auskragung verfügt, wodurch einseitige oder beidseitige Schattenfuge/n (43) gebildet werden und die Verbindungsleiste/n (40) sowohl auf eine Wand als auch flächenbündig in eine Wand eingebaut werden können und die Verbindungsleiste/n (40) mit einer oder mehreren verdeckten Kabelausführungen versehen ist/sind,
c) und aus einer oder mehreren elektrisch isolierenden Funktionsboxen (51, 52) bestehen, welche vorzugsweise aus Kunststoff gefertigt und so gestaltet sind, dass diese ein U-förmiges Grundprofil (55) darstellen, welches den Einbau von aneinander gereihten Tragringen (81) für elektrische Schalter, Steckdosen, Leuchten oder anderen elektrischen Komponenten ermöglicht und welches zusätzlich den Einbau von Transformatoren, Medienkonvertern, Überspannungs-Schutzelementen, EMV-Schutzelementen und/oder elektronischen Baugruppen ermöglicht, sowie weiterhin bestehend aus einer oder mehreren, lückenlos anreihbaren Abdeckungen (56), welche die Box (51, 52) komplett verschließen oder Öffnungen hat, so dass die Funktionsbereiche (83) der Schalter, Steckdosen und Leuchten soweit durchtauchen, dass sie auch noch durch die direkt darüber verlaufenden Säulenabdeckungen (12) durchtauchen können und alle metallischen, Teile der Steckdosen (80), Schalter und Leuchten elektrisch isolierend abgedeckt werden und weiterhin bestehend aus Endplatten (53), die mit dem Grundprofil (55) fest verbunden werden und die einen Schnappmechanismus (54) besitzen, der ein Einrasten der kompletten Funktionsbox (51, 52) in die Wandsäulen (10, 30) ermöglicht und die Funktionsbox (51, 52) mit Öffnungen ausgestattet werden können, welche zur Einführung von flexiblen oder festen Installationskabeln geeignet sind oder in die mehrere, handelsübliche Snap-In Module, die für die Verbindung und Weiterleitung von Energie- und/oder Datensignalen ausgelegt sind, eingerastet werden können.

2. Vorrichtungen gemäß Patentanspruch 1 **dadurch gekennzeichnet, dass** bei einer Aufputzmontage in die Schattenfugen der Säulen (13) und/oder Verbindungsleisten (43) eine Lichtführungsleiste (70), bestehend aus transparentem Material, montiert wird.

3. Vorrichtungen gemäß Patentanspruch 1 **dadurch gekennzeichnet, dass** bei einer Aufputzmontage in die Schattenfugen der Säulen (13) und/oder Verbindungsleisten (43) Leuchtmittel, vorzugsweise Leuchtdioden/LED und/oder OLEDs, als Einzelelement/e und/oder in streifenförmiger Anordnung montiert werden.

4. Vorrichtung gemäß Patentanspruch 1 **dadurch gekennzeichnet, dass** die Wandsäulen (10, 30) ausgestattet werden mit Geräteboxen (52), die komplett vorgefertigt sind, mit handelsüblichen Schaltern, Steckdosen (80) und Lichtkomponenten und daran angeschlossen, nach außen geführten flexiblen Leitungen und Steckern, die zusammengesteckt werden mit einer weiteren komplett verschließbaren Gerätebox (52), die mit in eine Endplatte (53) eingebauten Buchsen ausgestattet ist, die mit den Steckern der andern Box (52) zusammenpassen und deren Buchsen mit handelsüblichen, festen Installationsleitungen innerhalb der Box (52) kontaktiert werden können.

5. Vorrichtung gemäß Patentanspruch 1 **dadurch gekennzeichnet, dass** die Verschlusskontur (17) zwischen Grundprofilen (11, 21, 31) und Abdeckungen (12) so ausgeführt ist, dass mit Hilfe eines leitfähigen Gummischlauches oder Metallgewebeschlauches die Profile in metallener Ausführung so zusammen verrasten, dass ein elektrisch komplett geschlossenes, hochfrequenzdichtes Gehäuse entsteht und die Kontaktflächen der Grundprofile (11, 21, 31) und der Abdeckungen (12) im Kontaktbereich des Gummischlauches oder Metallgewebeschlauches elektrisch leitend und/oder ganzflächig oder partiell chromatiert ist.

6. Vorrichtung gemäß Patentanspruch 1 **dadurch gekennzeichnet, dass** die Grundprofile (11, 21, 31) und Abdeckungen (12, 42) zur Realisierung einer Abschirmung gegen Magnetfelder im Ganzen, oder partiell aus Stahlblech und/oder aus MU-Metall gefertigt werden.

7. Vorrichtung gemäß Patentanspruch 1 **dadurch gekennzeichnet, dass** die Grundprofile (11, 21, 31) und Abdeckungen (12, 42) zur Realisierung einer Abschirmung gegen Magnetfelder partiell oder flächendeckend mit selbstklebenden MU-Metallfolien ausgekleidet werden.
